# EUROPEAN PATENT SPECIFICATION

(11) **EP 2 233 725 B1**
(45) Date of publication and mention of the grant of the patent: **21.06.2017**
(21) Application number: 08870094.3
(22) Date of filing: 01.10.2008
(51) Int. Cl.: F02D 45/00, F01N 3/20, F02D 21/08, F02D 23/02, F02D 41/06

(54) **ELEVATED-TEMPERATURE OPERATION CONTROLLER FOR INTERNAL-COMBUSTION ENGINE**
REGLER FÜR HOCHTEMPERATURBETRIEB EINES VERBRENNUNGSMOTORS
CONTRÔLEUR DE FONCTIONNEMENT À TEMPÉRATURE ÉLEVÉE POUR MOTEUR À COMBUSTION INTERNE

(30) Priority: 10.01.2008 JP 2008002759
(43) Date of publication of application: 29.09.2010
(73) Proprietor: Honda Motor Co., Ltd., Minato-ku Tokyo 107-8556 (JP)
(72) Inventor: KURITA, Junichi, Wako-shi Saitama 351-0193 (JP)
(74) Representative: Beder, Jens
(86) International application number: PCT/JP2008/002761
(87) International publication number: WO 2009/087707

(56) References cited:
- EP-A2- 0 990 783
- DE-A1- 19 743 743
- JP-A- 7 229 419
- JP-A- 2002 089 343
- JP-A- 2003 041 983
- US-A- 5 613 360
- US-A1- 2004 000 136

## Description

### Technical Field

The present invention relates to a warm-up operation control system for an exhaust gas purification system of an internal combustion engine, and in particular to a technology for improving the precision in the warm-up operation control of the exhaust gas purification system.

### Background of the Invention

Usually, an exhaust system of an automobile equipped with a diesel engine is provided with an exhaust gas purification system such as a diesel oxidation catalyst (hereinafter, referred to as DOC), a diesel particulate filter (hereinafter, referred to as DPF), or a combination thereof so as to remove harmful components (such as HC, CO, NOx, and PM) from the exhaust gas. Generally, such an exhaust purification system exhibits its purification performance after reaching an activation temperature. Therefore, when the engine starts in a cold state, a warm-up operation will be carried out (by controlling the introduction of EGR (exhaust gas recirculation) gas, and/ or by extending the duration of fuel injection etc.) so as to warm up the exhaust gas purification system in a short period of time.

The warm-up operation of the exhaust gas purification system affects the drivability of the engine, and thus, preferably it is conducted according to the extent of warm-up of the engine. Conventionally, the necessity and the duration of the warm-up operation of the exhaust gas purification system have been determined according to the temperature of the cooling water. However the temperature of the cooling water is not an appropriate indicator for determining the extent of warm-up of the engine. For example, in summer when the ambient temperature is high, the temperature of the cooling water tend to be high even when the engine is not sufficiently warmed up, and thus if the EGR gas is introduced into the combustion chamber as the engine is supposed to be sufficiently warmed up according to the cooling water temperature (when actually it is not), it may cause misfiring. Therefore, it is proposed to calculate the total heat amount based on the amount of the fuel consumed from the start of the engine (i.e., from the start of engine cranking) and determine the completion of the warm-up of the exhaust gas purification system when the calculated heat amount reaches a predetermined threshold value (see Japanese patent application laid-open publication (*kokai*) 2002-89343(hereinafter, referred to as JP' 343)). Another warm-up system for a catalyst is disclosed in Patent Application US 2004/0000136A1. An object of US 2004/0000136A1 is to provide a method of controlling an internal combustion engine for warm-up of catalyst of an exhaust gas treatment device by regulating an EGR rate in close cooperation with an excess air ratio for rapid warm-up of catalyst, good emission performance and stable combustion. One of exemplary embodiments according to US 2004/0000136A1 provides a method of controlling an internal combustion engine for warm-up of catalyst of an exhaust gas treatment device located in the engine exhaust path, the engine including an exhaust gas recirculation (EGR) system driven in response to an EGR command signal to recirculate exhaust to an engine intake, the method comprising: generating a warm-up demand for heating the catalyst subject to constraint on stable combustion; determining a reduction in excess air ratio of the engine intake based on the warm-up demand; modifying a desired value in excess air ratio by the reduction to provide a modified desired value in excess air ratio; modifying a desired value in EGR rate based on the reduction to provide a modified desired value in EGR rate; and determining the EGR command signal based on the modified desired value in EGR rate.

### Brief Description of the Drawings

Figure 1 is a schematic configuration diagram illustrating the engine system of one embodiment.
Figure 2 is a block diagram illustrating the connection between the engine ECU and each device or member in the same embodiment.
Figure 3 is a flowchart illustrating the control steps conducted following engine start-up in the same embodiment.
Figure 4 is a flowchart illustrating the steps of the warm-up operation control in the same embodiment.
Figure 5 is a graph showing the time-dependent change of the total heat amount in the warm-up operation control of the same embodiment.
Figure 6 is a time chart showing the execution timing of each warm-up operation mode in the same embodiment.

### Brief Summary of the Invention

However, in the method of JP' 343, as the total generated heat amount is calculated based on the amount of the fuel consumed from the start of the cranking period (i.e., the period when the injected fuel does not contribute to the warm-up of the engine and the exhaust purification system), there is a problem that the extent of warm-up of the engine and that of the exhaust purification system may not be determined accurately. As is well-known in the art, the duration of the cranking period is not fixed, and tends to be longer in a cold environment since the fuel becomes less ignitable (due to the low temperature of the intake air), making it difficult for the engine to reach a fully combusted state (in which the fuel combustion has been achieved in all cylinders). Therefore, when using the method of JP' 343, there is a risk of estimating the engine and the exhaust gas purification system to be warmed up more than they are actually, which may lead to an inappropriate warm-up operation, thereby deteriorating drive performance and increasing harmful components in the exhaust gas.

The present invention was conceived in view of the above-mentioned problem of the prior art, and its object is to provide a warm-up operation control system that improves the warm-up operation control of an exhaust gas purification system.

The present invention provides a warm-up operation control system that is configured to execute a warm-up operation for an exhaust gas purification system provided in an exhaust system of an internal combustion engine, comprising: an operation state determining unit for determining an operation state of the internal combustion engine after start-up thereof and whether the internal combustion engine has reached a fully combusted state or not; a total heat amount estimating unit for estimating a total heat amount that has been generated since the internal combustion engine reached the fully combusted state based on an amount of consumed fuel; and a warm-up operation executing unit for executing the warm-up operation based on the total heat amount.

In the warm-up operation control system of the present invention, if the total heat amount is less than a first warm-up determining value, the warm-up operation executing unit may execute the warm-up operation in a predetermined first mode.

In the warm-up operation control system of the present invention, if the total heat amount is between the first warm-up determining value and a second warm-up determining value greater than the first warm-up determining value, the warm-up operation executing unit may execute the warm-up operation in a predetermined second mode.

In the warm-up operation control system of the present invention, the internal combustion engine may be equipped with at least one of an intake shutter, an EGR system and a common rail, and the warm-up operation in the first mode may comprise at least one of increasing introduction of intake air, increasing introduction of EGR gas and reducing a pressure in the common rail.

In the warm-up operation control system of the present invention, the internal combustion engine may be equipped with at least one of an EGR system, a variable geometry turbocharger and a common rail, and the warm-up operation in the second mode may comprise at least one of increasing introduction of EGR gas, reducing a supercharging pressure and reducing a pressure in the common rail.

The warm-up operation control system of the present invention may further comprise a warm-up operation control amount setting unit for setting a warm-up operation control amount, and if at least one of an intake air temperature and a cooling water temperature is not within a predetermined temperature range, the warm-up operation control amount setting unit may not set the warm-up operation control amount.

According to the first aspect of the present invention, as the total heat amount generated since the engine has reached the fully combusted state is calculated, the extent of warm-up can be determined accurately, thereby preventing the deterioration of the operation performance of the engine and the increase of harmful components in the exhaust gas. According to the second and the fourth aspect of the present invention, as the warm-up operation in the first mode is executed and controlled in a manner that does not deteriorate the initial fuel combustion right after the engine start-up, the exhaust gas purification system can be warmed up without causing misfiring. According to the third and fifth aspect of the present invention, as the warm-up operation in the second mode is executed when the engine is operating in a stable state, the exhaust gas purification system can be warmed up effectively and rapidly. According to the sixth aspect of the present invention, if the engine is in a cold state, the control process proceeds to a cold state operation control, and if the engine is in a warmed-up state, the control process proceeds to a normal operation control, thereby preventing the increase in fuel consumption that would be caused by unnecessary warm-up operation of the exhaust gas purification system.

### Detailed Description of the Preferred Embodiments

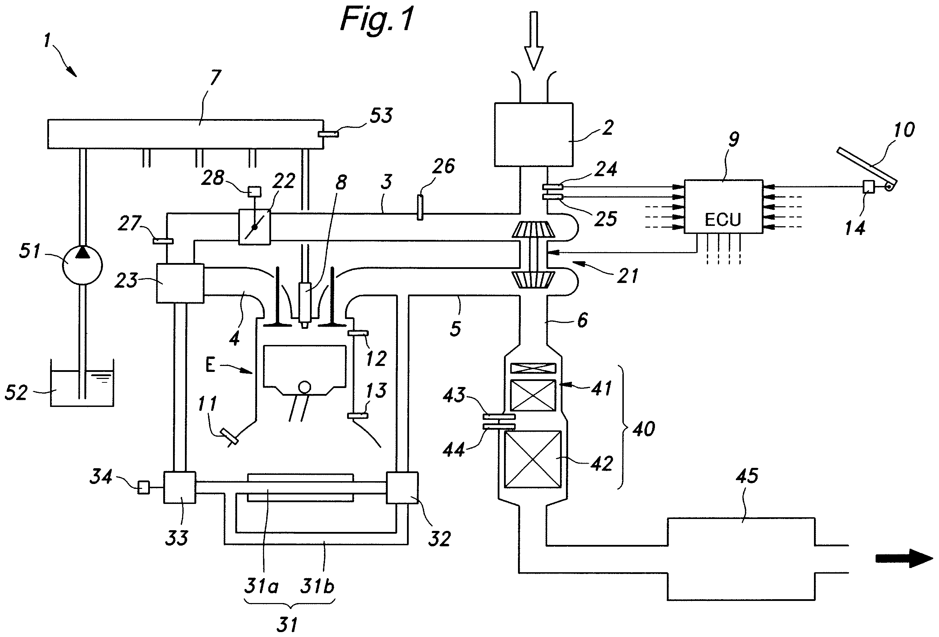

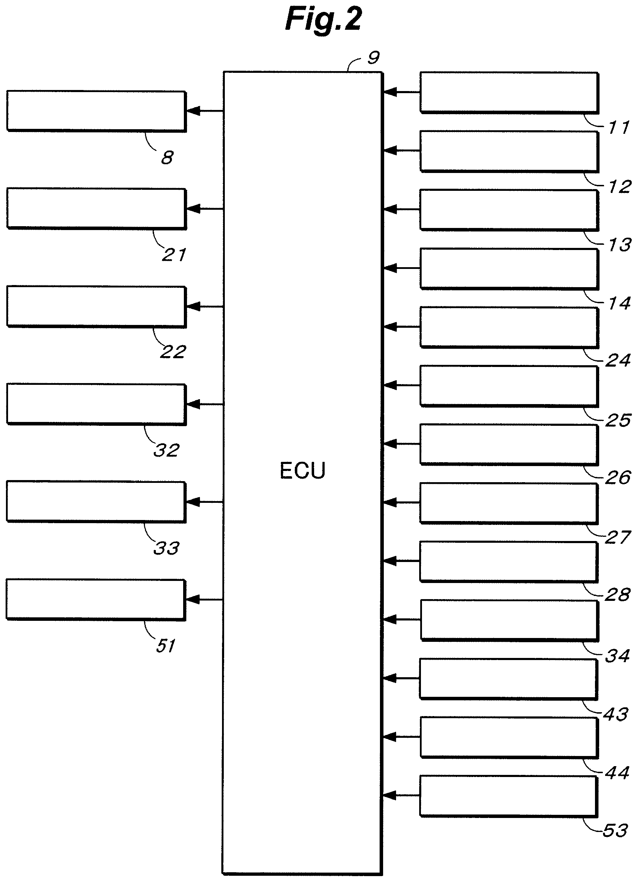

Next, an embodiment of an engine system where the present invention is applied is explained in detail with reference to accompanying drawings. Figure 1 is a configuration diagram illustrating the engine system of the embodiment. Figure 2 is a block diagram illustrating the connection between each device or member and an engine ECU.

### «Structure of the Embodiment»

As shown in Figure 1, the engine system 1 comprises an in-line four-cylinder diesel engine (internal combustion engine, hereinafter referred to as engine) E positioned in a central part of the engine system 1; an intake system including an air cleaner 2, an intake tube 3 and an intake manifold 4; an exhaust system including an exhaust manifold 5 and an exhaust tube 6; and a fuel supply system including a common rail 7 and an electronically-controlled fuel injection valve 8. In the vehicle interior of this embodiment, an engine electronic control unit (hereinafter, referred to as ECU) 9 is mounted so as to control the engine system 1 in an integrated manner, and an accelerator pedal 10 operated by a vehicle operator is mounted on the driver seat side. The engine E is provided with a crank angle sensor 11 for detecting a crank angle, an in-cylinder pressure sensor 12 for detecting a cylinder pressure, and a water temperature sensor 13 for detecting a cooling water temperature Tw. In addition, the accelerator pedal 10 is connected to an accelerator pedal sensor 14 for detecting a depression degree of the accelerator pedal 10.

A variable geometry turbocharger (hereinafter, referred to as VG turbo) 21 is mounted between the intake tube 3 and the exhaust tube 6 so as to constantly supply pressured air to the engine E using the energy of the exhaust gas. In addition, an intake shutter 22 is provided in the passage of the intake tube 3 so as to regulate the quantity of the intake air that is to be introduced into a combustion chamber of the engine E according to the operation range of the engine E. A swirl control valve 23 is provided between the intake tube 3 and the intake manifold 4 so as to increase the flow rate of the intake air in a low rotation / low load operation range of the engine E by reducing the cross-sectional area of the flow passage. The intake system further includes an intake air flow sensor 24 provided upstream of the VG turbo 21 for detecting an intake air flow quantity, an upstream intake air temperature sensor 25 provided upstream of the VG turbo 21 for detecting an upstream intake air temperature Ta1, a supercharging pressure sensor 26 provided downstream of the VG turbo 21 for detecting a supercharging pressure, a downstream intake air temperature sensor 27 provided downstream of the intake shutter 22 (between the intake shutter 22 and an EGR valve 33, which is explained below) for detecting a downstream intake air temperature Ta2. In addition, a shutter aperture degree sensor 28 is connected to the intake shutter 22 for detecting an aperture degree thereof.

The passage defined by the swirl control valve 23 and that of the exhaust manifold 5 are communicated with each other by an exhaust gas recirculating (hereinafter, referred to as EGR) passage 31 so as to conduct a high-temperature exhaust gas to the combustion chamber. The EGR passage 31 includes a cooler passage 31a and a bypass passage 31b diverging from each other at a changeover valve 32 and joining to each other near an EGR valve 33, which is provided for controlling the quantity of the exhaust gas (EGR gas) that is to be introduced into the combustion chamber. An EGR valve aperture sensor 34 is connected to the EGR valve 33 to detect an aperture degree thereof.

An exhaust gas purification system 40 comprising DOC 41 and DPF 42, which are exhaust gas purification devices aligned along the exhaust gas flow, is provided in the passage defined by the exhaust tube 6. An LAF (linear air fuel) ratio sensor 43 for detecting an air-fuel ratio and an NOx sensor 44 for detecting an NOx concentration in the exhaust gas are provided between the DOC 41 and the DPF 42. The DOC 41 in this embodiment includes a main catalyst and a low volume pre-catalyst disposed upstream of the main catalyst with an air gap therebetween (the main catalyst and the pre-catalyst are disposed in a tandem array with an air gap therebetween). The exhaust tube 6 is provided with a muffler at an tail end thereof (which is positioned at the rear side of the vehicle) so as to reduce the noise of the exhaust gas.

Fuel in a fuel tank 52 is pumped to the common rail 7 by a variable delivery supply pump 51 driven by the engine E. The common rail 7 is provided with a rail pressure sensor 53 for detecting an inner pressure thereof (hereinafter, referred to as rail pressure).

The engine ECU 9 comprises a microcomputer, a ROM, a RAM, a peripheral circuit, an input-output interface, and various drivers. As shown in Figure 2, the engine ECU 9 receives a detection signal from each sensor (such as crank angle sensor 11, cylinder pressure sensor 12 etc.) and sends drive signals to engine control devices and members (such as fuel injection valve 8, VG turbo 21 etc.). Although the engine ECU 9 is connected to a number of sensors and engine control devices other than those mentioned above, their description is omitted in order to avoid a complicated explanation.

### «The Mode of The Embodiment»

### <Control Operation Following Engine Start-up>

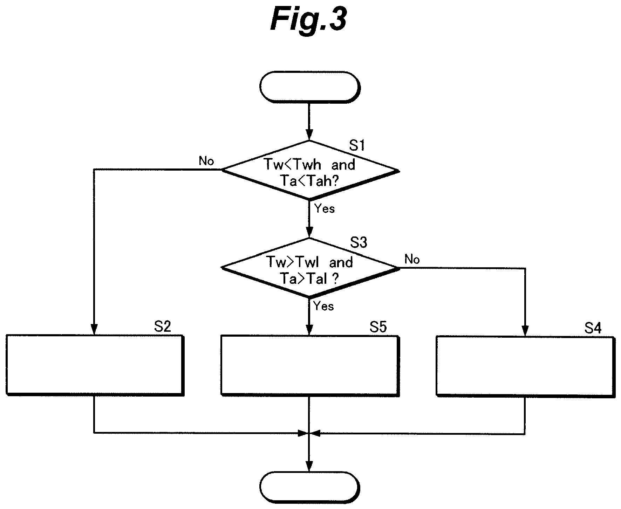

When the vehicle operator starts the engine system 1 by turning the ignition key to "ON", the engine ECU 9 carries out a control operation (hereinafter, referred to as start-up control) by executing the operation steps shown in the flowchart of Figure 3 at a predetermined processing interval (for example, 10 ms).

As shown in Figure 3, when the start-up control commences, the engine ECU 9 determines whether a current cooling water temperature Tw is lower than a high temperature threshold Twh (for example, 50 °C) and a current intake air temperature Ta is lower than a high temperature threshold Tah (for example, 30 °C) or not at step 1 (S1). If the result is "No", it means that the engine E is already warmed-up, and thus the engine ECU 9 proceeds to normal state (warmed-up state) operation control at step 2 (S2). For the intake air temperature Ta, one of upstream intake air temperature Ta1 and downstream intake air temperature Ta2 is used according to the operation condition of the engine E (such as the energization state of the glow plug).

On the other hand, if the result of step 1 (S1) is "Yes", the engine ECU 9 determines whether the cooling water temperature Tw is higher than a low temperature threshold Twl (for example, 20 °C) and the intake air temperature Ta is higher than a low temperature threshold Ta1 (for example, 20 °C) or not at step 3 (S3). If the result is "No", it means that the engine is in a cold state, and thus the engine ECU 9 proceeds to cold state operation control at step 4 (S4). In this case, the engine ECU 9 warms up the engine E immediately by increasing the introduction of the intake air into the combustion chamber, by reducing fuel injection pressure, by delaying fuel injection timing, etc..

If the result of step 3 (S3) is "Yes" (i.e., if the cooling water temperature Tw is between the high temperature threshold Twh and the low temperature threshold Twl, and the intake air temperature Ta is between the high temperature threshold Tah and the low temperature threshold Tal), the engine ECU 9 proceeds to warm-up operation control at step 5 (S5).

### <Warm-up Operation Control>

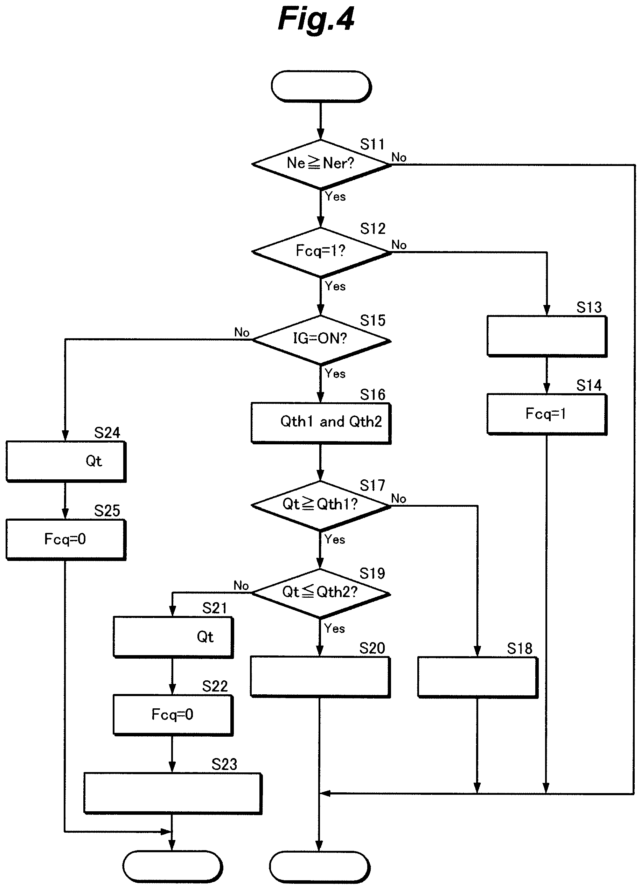

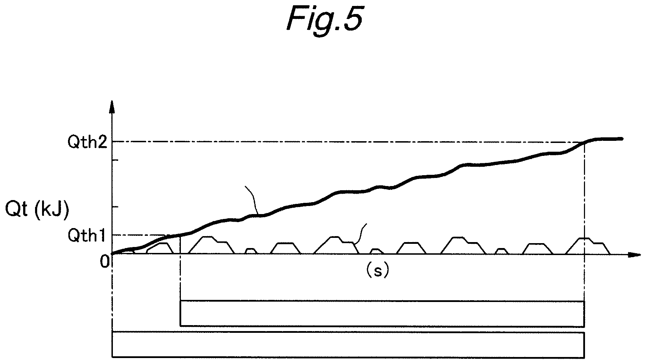

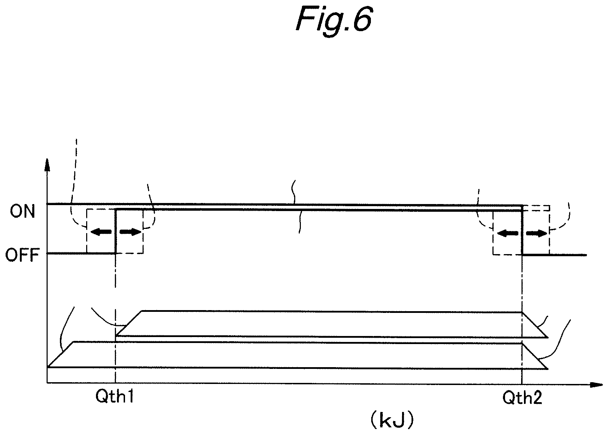

If the engine ECU 9 has proceeded to the warm-up operation control, it carries out and/or repeats the process steps shown in the flowchart of Figure 4 at a predetermined processing interval (for example, 10 ms). Figure 5 is a graph showing time-dependent change of the total heat amount generated during the warm-up operation. Figure 6 is a time chart showing the execution timing of the warm-up operation in a first mode and that of the warm-up operation in a second mode (explained later).

When the warm-up operation control starts, the engine ECU 9 determines whether a rotation speed Ne of the engine E has reached a predetermined fully combusted state determining value Ner (for example, 500 rpm) at step 11(S11). If the result is "No", the process returns to "START", repeating step 11 (S11).

When the vehicle operator turns the ignition key to "START", the engine E starts after being cranked by a starter (not shown), and its rotation speed Ne increases rapidly. When the rotation speed Ne of the engine E reaches the fully combusted state determining value Ner and thus the result of step 11 (S11) becomes "Yes", the engine ECU 9 determines whether the total heat amount calculation beginning flag Fcq, whose initial value is 0, is 1 or not at step 12 (S12).

As the first result of step 12 (S12) is "No", the engine ECU 9 starts the calculation of the total heat amount Qt of the engine E at step 13 (S13), and thus the total heat amount calculation beginning flag Fcq becomes 1 at step 14 (S14), and then the process returns to "START". The total heat amount Qt can be obtained by multiplying a product of an injection amount of the fuel injection valve 8 per injection and the rotation speed Ne of the engine E by a predetermined conversion coefficient with and then correcting the calculated result using a temperature correction coefficient Kt. As shown in Figure 5, the total heat amount gradually increases with each fuel injection. The temperature correction coefficient Kt is set according to the cooling water temperature Tw and the intake air temperature Ta at engine start. Specifically, the temperature correction coefficient Kt may be set to be 1.0 if the cooling water temperature Tw and the intake air temperature Ta at the engine start are ordinary (for example, 25 °C), or more than 1.0 when Tw and Ta are lower, or less than 1.0 when Tw and Ta are higher.

As the second or subsequent result of step 12 (S12) becomes "Yes", the engine ECU 9 determines whether the ignition key is turned to "ON" or not at step 15 (S15). If the result is "Yes", then the engine ECU 9 sets a first warm-up determining value Qth1 and a second warm-up determining value Qth2 from a map (not shown) based on the cooling water temperature Tw and the intake air temperature Ta at the engine start. As shown in Figure 6, if the cooling water temperature Tw and the intake air temperature Ta are higher, the DOC 41 can be warmed up in a short period of time, and thus the first warm-up determining value Qth1 and the second warm-up determining value Qth2 will be set to be smaller. On the other hand, if the cooling water temperature Tw and the intake air temperature Ta are lower, a longer period of time will be required to warm-up the DOC 41, and thus the first warm-up determining value Qth1 and the second warm-up determining value Qth1 will be set to be greater.

### (Warm-up Operation in the First Mode)

Next, the engine ECU 9 determines whether the total heat amount Qt has reached the first warm-up determining value Qth1 (for example, approximately 2kJ) or not at step 17 (S17). As the first result of this step is "No", the ECU 9 proceeds to step 18 (S18), executing the warm-up operation in the first mode.

In this embodiment, the warm-up operation in the first mode comprises opening the intake shutter 22 (increasing the introduction of the intake air into the combustion chamber), opening the EGR valve 33 during fuel cutoff (introducing the hot EGR gas into the combustion chamber when the vehicle is decelerating), and reducing discharge amount of the supply pump 51 (reducing the pressure in the common rail 7 and prolonging the period of the injection from the fuel injection valve 8). As this warm-up operation hardly deteriorates the engine combustion even if it is carried out following the engine start, it can warm up the DOC 41 without causing misfiring. As shown in Figure 6, on starting the warm-up operation in the first mode, ramp control, where a control amount is gradually approximated to a target value, is used to prevent a sudden change in the operation state.

### (Warm-up Operation in the Second Mode)

As shown in Figure 5, when the total heat amount Qt reaches the first warm-up determining value Qth1 as the engine E warms up, and thus the result of step 17 becomes "Yes", the engine ECU 9 determines whether the total heat amount Qt is equal to or lower than the second warm-up determining value Qth2 (for example, approximately 12 kJ) at step 19 (S19). As the first result of this step is Yes (i.e., as the total heat amount Qt is between the first warm-up determining value Qth1 and the second warm-up determining value Qth2), the engine ECU 9 proceeds to step 20 (S20), executing the warm-up operation in the second mode.

In this embodiment, the warm-up operation in the second mode is executed in addition to that of the first mode, and comprises opening the EGR valve 33 (introducing EGR gas into the combustion chamber) during a normal operation of the engine, reducing the supercharging pressure generated by the VG turbo 21 (reducing the work of the VG turbo 21), and reducing the fuel injection pressure of the fuel injection valve 8 (extending combustion duration). As this warm-up operation is executed when the engine E is operating in a stable state, the DOC 41 can be warmed up effectively without deteriorating the fuel combustion. As shown in Figure 6, ramp control similar to that of the first mode warm-up operation is also used on starting the second mode warm-up operation in order to prevent a sudden change in the operation state.

### (Completion of the Warm-up Operation)

As shown in Figure 5, when the engine warm-up process further advances and the total heat amount Qt reaches the second warm-up determining value Qth2 (i.e., when the warm-up of the DOC 41 is estimated to be completed), and thus the result of step 19 (S19) becomes "No", the engine ECU 9 resets the total heat amount Qt to 0 at step 21 (S21) and sets the total heat amount calculation beginning flag Fcq to 0 at step 22 (S22). Then, the process proceeds to the normal operation control at step 23 (S23), terminating the warm-up operation control. As shown in Figure 6, ramp control is also used on terminating the warm-up operation of each mode in order to prevent a sudden change in the operation state.

### (Halt of the Warm-up Operation Control)

When the vehicle operator turns the ignition key to "OFF" (i.e., stop the engine E) in short time after starting the engine E, the result of step 15 (S15) becomes "No", and thus the engine ECU 9 resets the total heat amount Qt to 0 at step 24 (S24) and sets the total heat amount calculation beginning flag Fcq to 0 at step 25 (S25), halting the warm-up operation control. Therefore, upon the next engine start-up, the start-up control and the warm-up operation control will be carried out according to the cooling water temperature Tw and the intake air temperature Ta at that time.

According to the present invention configured as described above, the extent of warm-up of the engine and that of the exhaust gas purification system can be determined more precisely in comparison with the conventional systems that calculate the total heat amount based on the amount of fuel consumed from the start of engine cranking, and thus the DOC 41 can be warmed-up promptly while maintaining the operation of the engine E in a favorable state.

Although the preferred embodiment of the present invention has been described above, it should be understood that the present invention is not limited thereto. For example, in the embodiment described above, although the internal combustion engine was illustrated as an in-line four-cylinder diesel engine, the present invention can also be applied to another type of engine (such as gasoline engine, HCCI engine etc.). In addition, for the exhaust gas purification system, devices other than DOC and DPF can also be used (such as ternary catalyst, lean NOx catalyst etc.). Furthermore, it should be understood that the configuration of the engine system and the control process thereof described above in specific manner can be modified without departing from the scope of the present invention.

### LIST OF NUMERALS

- 1: engine system
- 7: common rail
- 8: fuel injection valve
- 9: engine ECU (warm-up operation execution system)
- 21: VG turbo (variable geometry turbocharger)
- 22: intake shutter
- 41: DOC (exhaust gas purification system)
- 42: DPF (exhaust gas purification system)
- 51: supply pump
- E: engine

## Claims

1. A warm-up operation control system (9) that is configured to execute a warm-up operation for an exhaust gas purification system (40) provided in an exhaust system of an internal combustion engine, comprising:
an operation state determining unit determining an operation state of the internal combustion engine after start-up thereof and whether the internal combustion engine has reached a fully combusted state or not;
**characterized in that** the warm-up control system further comprises:
a total heat amount estimating unit estimating a total heat amount (Qt) that has been generated since the internal combustion engine reached the fully combusted state based on an amount of consumed fuel; and
a warm-up operation executing unit executing the warm-up operation based on the total heat amount (Qt).

2. The warm-up operation control system (9) according to claim 1, wherein if the total heat amount (Qt) is less than a first warm-up determining value (Qth1), the warm-up operation executing unit executes the warm-up operation in a predetermined first mode.

3. The warm-up operation control system (9) according to claim 2, wherein if the total heat amount (Qt) is between the first warm-up determining value (Qth1) and a second warm-up determining value (Qth2) greater than the first warm-up determining value (Qth1), the warm-up operation executing unit executes the warm-up operation in a predetermined second mode.

4. The warm-up operation control system (9) according to claim 2, wherein the internal combustion engine is equipped with at least one of an intake shutter (22), an EGR system and a common rail (7), and the warm-up operation in the first mode comprises at least one of increasing introduction of intake air, increasing introduction of EGR gas and reducing a pressure in the common rail (7).

5. The warm-up operation control system (9) according to claim 3, wherein the internal combustion engine is equipped with at least one of an EGR system, a variable geometry turbocharger (21) and a common rail (7), and the warm-up operation in the second mode comprises at least one of increasing introduction of EGR gas, reducing a supercharging pressure and reducing a pressure in the common rail.

6. The warm-up operation control system (9) according to claim 1, further comprising a warm-up operation control amount setting unit for setting a warm-up operation control amount, wherein if at least one of an intake air temperature (Ta) and a cooling water temperature (Tw) is not within a predetermined temperature range, the warm-up operation control amount setting unit does not set the warm-up operation control amount.

## Patentansprüche

1. Aufheizbetrieb-Steuerungssystem (9), das eingerichtet ist, um einen Aufheizbetrieb für ein Abgasreinigungssystem (40) auszuführen, das in einem Abgassystem einer Brennkraftmaschine vorgesehen ist, umfassend:
eine Betriebszustanderfassungseinheit, die einen Betriebszustand der Brennkraftmaschine nach deren Anlassen und ob die Brennkraftmaschine einen vollständigen Verbrennungszustand erreicht hat oder nicht erfasst;
**dadurch gekennzeichnet, dass** das Aufheiz-Steuerungssystem weiter umfasst:
eine Gesamtwärmemengenschätzeinheit, die eine Gesamtwärmemenge (Qt) schätzt, die erzeugt wurde, seit die Brennkraftmaschine den Zustand vollständiger Verbrennung erreicht hat, basierend auf einer Menge konsumierten Kraftstoffs; und
Aufheizbetrieb-Ausführungseinheit, die den Aufheizbetrieb basierend auf der Gesamtwärmemenge (Qt) ausführt.

2. Aufheizbetrieb-Steuerungssystem (9) gemäß Anspruch 1, wobei, wenn die Gesamtwärmemenge (Qt) kleiner ist als ein erster Aufheizerfassungswert (Qth1), die Aufheizbetrieb-Ausführungseinheit den Aufheizbetrieb in einem vorbestimmten ersten Modus ausführt.

3. Aufheizbetrieb-Steuerungssystem (9) gemäß Anspruch 2, wobei, wenn die Gesamtwärmemenge (Qt) zwischen dem ersten Aufheizerfassungswert (Qth1) und einem zweiten Aufheizerfassungswert (Qth2) ist, der größer ist als der erste Aufheizerfassungswert (Qth1), die Aufheizbetrieb-Ausführungseinheit den Aufheizbetrieb in einem vorbestimmten zweiten Modus ausführt.

4. Aufheizbetrieb-Steuerungssystem (9) gemäß Anspruch 2, wobei die Brennkraftmaschine mit wenigstens entweder einem Einlassverschluss (22), einem EGR-System oder einer gemeinsamen Kraftstoffleitung (Common Rail) (7) ausgerüstet ist, und der Aufheizbetrieb in dem ersten Modus wenigstens entweder Erhöhen des Einleitens von Einlassluft, Erhöhen des Einlassens von EGR-Gas oder Reduzieren einer Drucks in der gemeinsamen Kraftstoffleitung (Common Rail) (7) umfasst.

5. Aufheizbetrieb-Steuerungssystem (9) gemäß Anspruch 3, wobei die Brennkraftmaschine wenigstens mit einem EGR-System, einem Turbolader variabler Geometrie (21) oder einer gemeinsamen Kraftstoffleitung (Common Rail) (7) ausgerüstet ist, und der Aufheizbetrieb in dem zweiten Modus wenigstens das Erhöhen des Einlassens von EGR-Gas, Reduzieren eines Ladedrucks oder Reduzieren eines Drucks in der gemeinsamen Kraftstoffleitung umfasst.

6. Aufheizbetrieb-Steuerungssystem (9) gemäß Anspruch 1, weiterhin umfassend eine Aufheizbetrieb-Steuerungsmenge-Einstelleinheit zum Einstellen einer Aufheizbetrieb-Steuerungsmenge, wobei, wenn wenigstens entweder eine Einlasslufttemperatur (Ta) oder eine Kühlwassertemperatur (Tb) nicht innerhalb eines vorbestimmten Temperaturbereichs liegt, die Aufheizbetrieb-Steuerungsmenge-Einstelleinheit die Aufheizbetrieb-Steuerungsmenge nicht einstellt.

## Revendications

1. Système de commande d'opération de réchauffage (9) qui est configuré pour exécuter une opération de réchauffage pour un système de purification des gaz d'échappement (40) prévu dans un système d'échappement d'un moteur à combustion interne, comprenant :
une unité de détermination d'état d'opération déterminant un état d'opération du moteur à combustion interne après son démarrage et si le moteur à combustion interne a atteint un état de combustion totale ou non ;
**caractérisé en ce que** le système de commande de réchauffage comprend en outre :
une unité d'estimation de quantité de chaleur totale estimant une quantité de chaleur totale (Qt) qui a été générée depuis que le moteur à combustion interne a atteint l'état de combustion totale sur la base d'une quantité de carburant consommé ; et
une unité d'exécution d'opération de réchauffage exécutant l'opération de réchauffage sur la base de la quantité de chaleur totale (Qt).

2. Système de commande d'opération de réchauffage (9) selon la revendication 1, dans lequel, si la quantité de chaleur totale (Qt) est inférieure à une première valeur de détermination de réchauffage (Qth1), l'unité d'exécution d'opération de réchauffage exécute l'opération de réchauffage dans un premier mode prédéterminé.

3. Système de commande d'opération de réchauffage (9) selon la revendication 2, dans lequel, si la quantité de chaleur totale (Qt) se situe entre la première valeur de détermination de réchauffage (Qth1) et une seconde valeur de détermination de réchauffage (Qth2) supérieure à la première valeur de détermination de réchauffage (Qth1), l'unité d'exécution d'opération de réchauffage exécute l'opération de réchauffage dans un second mode prédéterminé.

4. Système de commande d'opération de réchauffage (9) selon la revendication 2, dans lequel le moteur à combustion interne est équipé d'au moins l'un parmi un volet d'admission (22), un système EGR et une rampe commune (7), et l'opération de réchauffage dans le premier mode comprend au moins l'une parmi l'augmentation de l'introduction d'air d'admission, l'augmentation de l'introduction de gaz EGR et la réduction d'une pression dans la rampe commune (7).

5. Système de commande d'opération de réchauffage (9) selon la revendication 3, dans lequel le moteur à combustion interne est équipé d'au moins l'un parmi un système EGR, un turbocompresseur à géométrie variable (21) et une rampe commune (7), et l'opération de réchauffage dans le second mode comprend au moins l'une parmi l'augmentation de l'introduction de gaz EGR, la réduction d'une pression de suralimentation et la réduction d'une pression dans la rampe commune.

6. Système de commande d'opération de réchauffage (9) selon la revendication 1, comprenant en outre une unité de réglage de quantité de commande d'opération de réchauffage pour régler une quantité de commande d'opération de réchauffage, dans lequel, si au moins l'une parmi une température d'air d'admission (Ta) et une température d'eau de refroidissement (Tw) n'est pas à l'intérieur d'une plage de températures prédéterminée, l'unité de réglage de quantité de commande d'opération de réchauffage ne règle pas la quantité de commande d'opération de réchauffage.
